# EUROPEAN PATENT SPECIFICATION

(11) **EP 2 008 838 B1**
(45) Date of publication and mention of the grant of the patent: **14.10.2009**
(21) Application number: 07425399.8
(22) Date of filing: 28.06.2007
(51) Int. Cl.: B60C 27/06

(54) **Wheel rim anti-scratch device for snow chains**
Felgenkratzschutzvorrichtung für Schneeketten
Dispositif anti-rayures de jante de roue pour chaînes de neige

(43) Date of publication of application: 31.12.2008
(73) Proprietor: Thule S.p.A., 23847 Molteno (Lecco) (IT)
(72) Inventor: Arrigoni Neri, Marco, 23811 Ballabio (Lecco) (IT); Farina, Luigi, 23843 Dolzago (Lecco) (IT)
(74) Representative: Petruzziello, Aldo

(56) References cited:
- EP-A- 1 526 008
- EP-A- 1 621 368

## Description

The present invention refers to a device for snow chains adapted to be mounted on the vehicle tyres and in particular to an anti-scratch device to avoid damaging the wheel rims of the tyres, because of rubbing against the metal elements of snow chains.

When a vehicle is travelling on a road surface covered with snow, sleet or ice, its tyres do not have a good grip and dangerous swerving and skidding of the vehicle can occur. To avoid these problems, it is customary to use anti-skid devices, commonly known as snow chains.

Snow chains, normally mounted on the drive wheels of the vehicle, bite into the snow and/or into the ice deposited on the road surface, increasing the friction on the tread and allowing a good road-holding by the vehicle's tyres.

As is known, a snow chain generally consists of two side elements (chains, flexible cables, steel wires, ropes or the like), which in conditions of use are close in a ring on the side of the wheel facing towards the outside of the vehicle and on the side of the wheel facing towards the inside of the vehicle, which will be referred to hereunder as outer ring and inner ring. The inner ring and the outer ring are connected by a series of portions of chain variously arranged to create friction on the tread of the tyre, the whole being completed by a device for tensioning said elements, known as a tensioner.

European patent EP 1.024.035 discloses a self-tensioning device in which one end of the outer ring of the snow chains is coupled to a no-return block and the other end comprises a free end portion. The end portion is passed through the no-return block, which allows traction thereof in only one direction and not in the opposite direction. In this manner, by pulling the end portion, it is possible to tension the chains and, once the terminal portion is released, the no-return block avoids slackening of the chains.

All the elements that can come into contact with the wheel rim or with a wheel rim cover, such as the tensioning device and the end portion of the outer ring of the chain, are made of plastic material (or coated with plastic material) to prevent any rubbing against the wheel rim from causing a damage thereof, a drawback that is felt all the more in the case of alloy rims, which are normally more costly and delicate than the steel rims.

European patent EP 1.621.368 discloses a no-return block for the chain-tensioning cable provided with an insert of soft material destined to come into contact with the wheel rim. This document shows the features of the preamble of claim 1.

However, the problem of the rubbing of some metal elements of the snow chains on the rim remains, with particular reference to the connecting hooks joining the links of the outer ring to the portions of chain crossing the tyre tread transversally.

To solve this problem at least in part, a guard device is known to the market, comprising a streamlined shell consisting of two plastic half-shells, which couple together enclosing within them the connecting hook and parts of the links of the portions of chain and of the links of the outer ring joined to the connecting hook.

This prior art guard device proves excessively bulky, complex and costly because of the particular shapes the half-shells and their coupling means must have.

Object of the present invention is to overcome the abovementioned drawbacks by providing an anti-scratch device for snow chains that is able to avoid damages to the wheel rims and at the same time is reliable and adapted not to weaken the grip of the snow chains.

Another object of the present invention is to provide such an anti-scratch device for snow chains that is cheap and easy to produce.

Yet another object of the present invention is to provide such an anti-scratch device for snow chains that is practical and simple to mount.

These objects are achieved in accordance with the invention with the characteristics listed in appended independent claim 1.

Advantageous embodiments of the invention are apparent from the dependent claims.

According to the invention, the anti-scratch device for snow chains comprises a first guard element comprising a stud provided with a tang adapted to be inserted into the connecting hook which joins a link of the outer ring to the portions of chain disposed transversally on the tyre, and a second guard element comprising a stud provided with a through hole within which engages the end of said tang of the first guard element.

The advantages of the anti-scratch device according to the invention, which is cheap and simple to produce and to mount, are obvious.

Further characteristics of the invention will be made clearer by the detailed description that follows, referring to a purely exemplifying and therefore non-limiting embodiment thereof, illustrated in the appended drawings, in which:
Figure 1 is a side view of an anti-skid device according to the prior art, taken from the outer side of the wheel;
Figure 1A is a view of the detail enclosed in the circle A of Fig. 1, illustrating a connecting hook that joins the outer ring to the portions of chain that cross the tread;
Figure 2 is a perspective view showing the connecting hook of Figure 1A;
Figure 3 is an exploded perspective view showing the wheel rim anti-scratch device according to the invention;
Figure 4 is a side view of a first guard element of the anti-scratch device of Figure 3;
Figure 5 is an axial sectional view of a second guard element of the anti-scratch device of Figure 3;
Figure 6 is a side view illustrating the anti-scratch device of Figure 3 applied to the snow chain of Figure 1; and
Figure 7 is top plan view, taken in the direction of the arrow A of Figure 6, illustrating the anti-scratch device according to the invention applied to the snow chain.

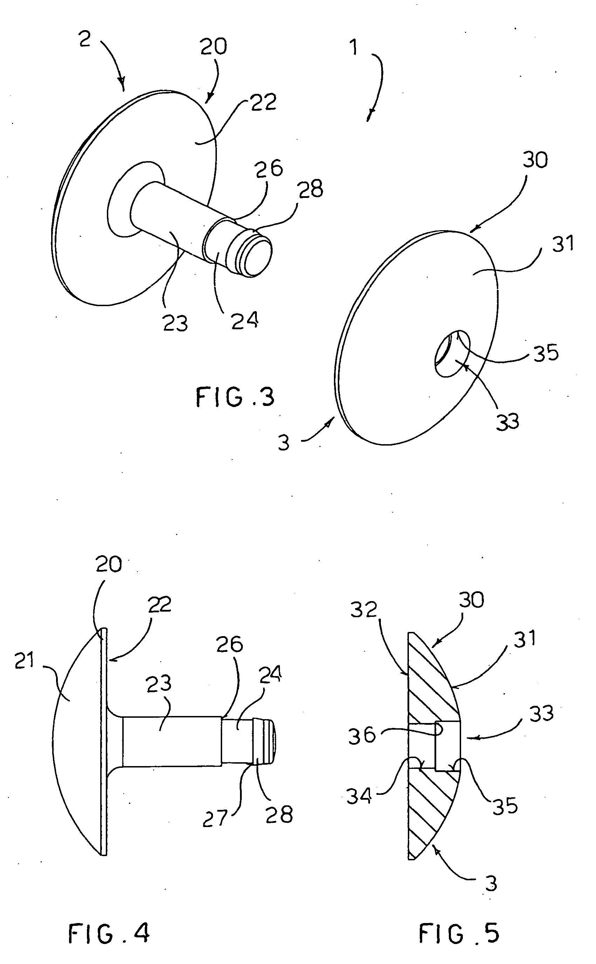

The anti-scratch device for snow chains according to the invention, designated as a whole with reference numeral 1 and illustrated in Figures 3 to 7, is described with the aid of the figures.

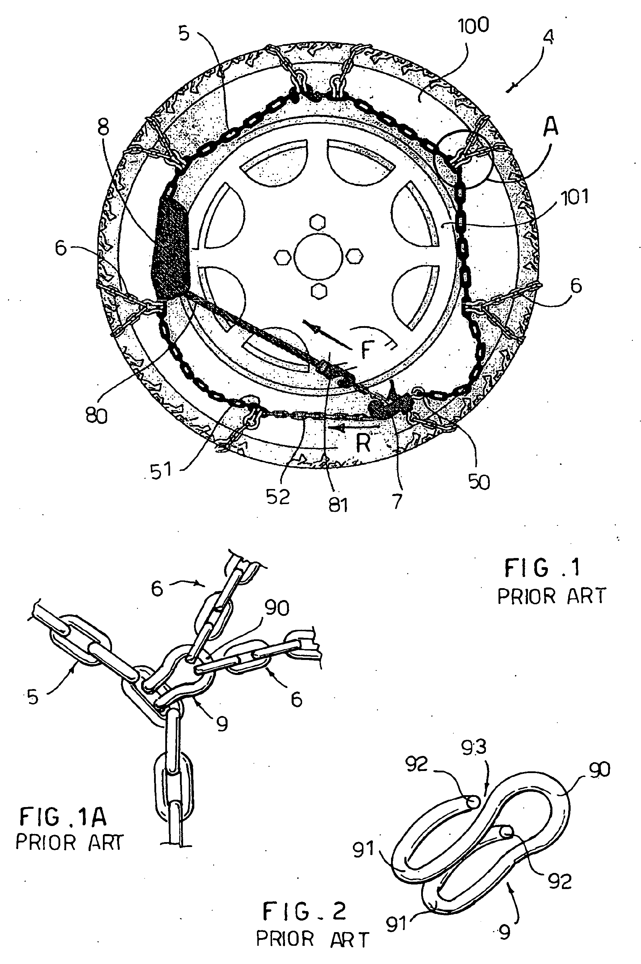

Figure 1 shows a vehicle wheel comprising a tyre 100 mounted on a wheel rim 101. A snow chain, denoted as a whole with the reference numeral 4, is applied to the wheel as an anti/skid device.

The chain 4 comprises:
- an element (not visible) closed in a circle or in a ring on the part of the wheel facing towards the inside of the vehicle, hereunder called the inner ring,
- an element 5 closed in a circle or in a ring on the part of the wheel facing towards the outside of the vehicle, hereunder called the outer ring, and
- a series of portions of anti-skid chain 6, disposed transversally on the tread of the tyre, which form the join between the outer ring 5 and the inner ring.

As shown better in Figure 1A, the portions of chain 6 are connected to the outer ring 5 by means of a special connecting hook 9. As shown also in Figure 2, the connecting hook 9 is substantially shaped as a link of a chain and is obtained starting from a solid metal element with a circular section which is bent into a U-shape so as to obtain a first loop 90 which accommodates one or two end links of the portions of chain 6. The two end portions of the metal element bent into a U-shape are both bent into a U-shape so as to form other two loops 91 on parallel planes to each other and at right angles to the plane in which the first loop 90 is situated. The two loops 91 accommodate a link of the outer ring 5. The two ends 92 of the metal element forming the connecting hook 9 are situated at such a distance from the body of the connecting hook as to form a sufficiently narrow gap 93 to prevent the link of the outer ring 5 from coming out.

Returning to Figure 1, one end 50 of the outer ring 5 is coupled to a no-return block 7 and the other end 51 thereof is connected to a chain terminal portion 52 which passes through the no-return block 7. The no-return block 7 allows the end portion 52 to slide in the chain tensioning direction (arrow F) and prevents the end portion 52 to slide in the chain slackening direction (arrow R).

Optionally, a self-tensioning block 8 - which contains an elastic cable 80 ending in a hook 81 destined to hook to the free end of the terminal portion 52 of the outer ring to tension it - is mounted in the outer ring 5.

Obviously, other per se known systems can be provided in place of the no-return block 7 and/or of the self-tensioning block 8 to close and to tension the outer ring 5.

The self-tensioning block 8, the hook 81 of the elastic cable 80 and the end portion 52 of the outer ring 5 can also be made of plastic material or of any other suitable material to avoid possible damage to the wheel rim 101, following rubbing against said elements.

The no-return block 7 is made of metal material, but inserts of soft material are applied thereto, as described in EP 1.621.368.

The connecting hook 9, for reasons of safety, must be made of metal material and its free ends 92 can be sharp. As a result, the continual rubbing of the connecting hook 9 and in particular of the sharp ends 92 thereof against the wheel rim 101 causes damage to said rim.

To overcome this drawback, an anti-scratch device has been devised according to the invention.

With reference to Figures 3 to 5, the anti-scratch device 1 comprises two guard elements 2 and 3, made of a soft material such as plastic or rubber, which can be coupled to each other.

The first guard element 2 comprises a substantially discoid shaped stud 20 having a rounded outer surface 21 in the shape of a spherical cap and a flat inner surface 22. A cylindrical tang or pin 23 integral with the stud 20 axially protrudes from the inner surface 22 of the stud 20. The tang 23 is provided with a smaller diameter portion or annular groove 24 which defines two radial abutment surfaces 26 and 27. The tang 23 ends in a truncated conical end part 28.

The second guard element 3 comprises a substantially discoid shaped stud 30 having a rounded outer surface 31 in the form of a spherical cap and a flat inner surface 32. A though hole 33 is made axially in the stud 30. The hole 33 comprises a smaller diameter hole 34 towards the flat inner surface 32 and a larger diameter hole 35 towards the rounded outer surface 31. Between the two holes 34 and 35 is defined a radial abutment surface 36. The smaller diameter hole 34 has a slightly smaller diameter than the larger diameter of the truncated conical end part 28 of the tang 23.

The two studs 20 and 30 have substantially the same dimensions, that is a diameter of about 18-22 mm so as to develop a large enough circular surface to cover at least partially the connecting hook 9.

The tang 23 has a diameter of about 2-4 mm, small enough to be able to be inserted into the loop 90 of the connecting hook. The tang 23 has a length of about 15-20 mm so that its tapered end 28 can protrude outward from the connecting hook 9 to engage in the hole 33 of the second guard element 3.

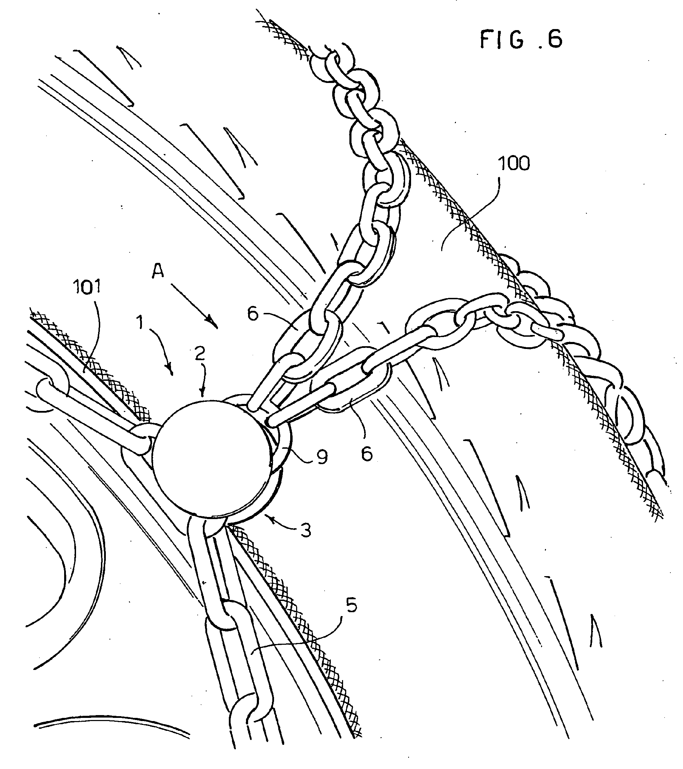

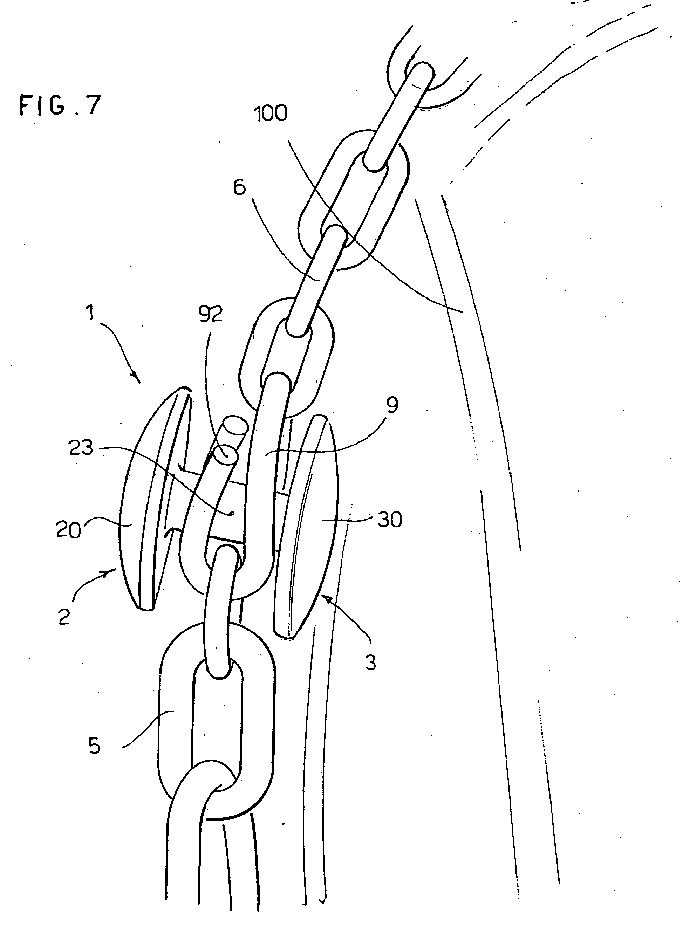

As shown in Figures 6 and 7, to mount the anti-scratch device it is sufficient to insert the tang 23 of the first guard element 2 into the connecting hook 9 and then force the truncated conical tip 28 of the tang of the first guard element into the hole 33 of the second guard element. As a result, the truncated conical tip 28 of the tang of the first guard element 2 passes through the smaller diameter hole 34 and comes to rest inside the larger diameter hole 35 of the second guard element 3. In this manner the two guard elements 2 and 3 are coupled together by means of press coupling, of the snap lock type.

Disengagement of the two guard elements is avoided by the fact that the abutment surface 27 of the tang 23 of the fist guard element abuts against the abutment surface 36 which is created in the hole 33 of the second guard element.

Even if Figures 6 and 7 show the guard device applied to the connecting hook 9, it is obvious that it can be applied, in an equivalent manner, also to any link of the outer ring 5, and equally to any link of the portions of chain 6 which cross the tread of the tyre.

Numerous changes and modifications of detail within the reach of a person skilled in the art can be made to the present embodiment, without thereby departing from the scope of the invention, as set forth in the appended claims.

## Claims

1. An anti-scratch device (1) for snow chains comprising:
- a first guard element (2) comprising a stud (20) provided with a tang (23), and
- a second guard element (3) comprising a stud (30) **characterized in that** said tang (23) of the first guard element (2) is adapted to be inserted into the connecting hook (9), which connects a link of the outer ring (5) to the portions of chain (6) disposed transversally on the tyre (100), and **in that** in said stud (30) of the second guard element (3) is formed a through hole (33) within which the end (28) of said tang (23) of the first guard element (2) engages.

2. A device (1) according to claim 1, **characterised in that** said tang (23) protrudes axially from the stud (20) of the first guard element (2) and **in that** said hole (33) is formed axially in the stud (30) of the second guard element (3).

3. A device (1) according to claim 1 or 2, **characterised in that** said tang (23) of the first guard element (2) engages in a press coupling relationship, of the snap lock type, inside said hole (33) of the second guard element (3).

4. A device (1) according to claim 3, **characterized in that** said tang (23) of the first guard element (2) has a smaller diameter portion or annular groove (24) defined between two radial abutment surfaces (26, 27).

5. A device (1) according to claim 3 or 4, **characterised in that** said tang (23) of the first guard element (2) has a truncated conical end (28).

6. A device (1) according to any one of claims 3 to 5, **characterised in that** said hole (33) of the second guard element (3) has a smaller diameter hole (34) and a larger diameter hole (35) coaxial with each other, so as to form a radial abutment surface (36).

7. A device (1) according to any one of the preceding claims, **characterised in that** said stud (20, 30) of the first and/or of the second guard element (2, 3) is substantially discoid shaped, with the outer rounded surface substantially shaped as a spherical cap.

8. A device (1) according to any one of the preceding claims, **characterised in that** said stud (20, 30) of the first and/or of the second guard element (2, 3) is substantially discoid shaped with a substantially flat inner surface.

9. A device (1) according to any one of the preceding claims, **characterized in that** said stud (20, 30) of the first and/or of the second guard element (2, 3) is made of soft material, such as plastic or rubber.

## Patentansprüche

1. Kratzschutzvorrichtung (1) für Schneeketten, umfassend:
- ein erstes Schutzelement (2), umfassend einen Knopf (20), der mit einem zylindrischen Schaft (23) bereitgestellt ist, und
- ein zweites Schutzelement (3), umfassend einen Knopf (30),
**dadurch gekennzeichnet, dass** der zylindrische Schaft (23) des ersten Schutzelements dazu ausgebildet ist, in den Verbindungshaken (9) eingesetzt zu werden, der ein Glied des äußeren Rings (5) mit den Abschnitten einer Kette (6) verbindet, die quer an dem Reifen (100) angeordnet sind, und dass in dem zweiten Knopf (30) des zweiten Schutzelements (3) ein Durchgangsloch (33) gebildet ist, in das das Ende (28) des zylindrischen Schafts (23) des ersten Schutzelements (2) eingreift.

2. Vorrichtung (1) nach Anspruch 1, **dadurch gekennzeichnet, dass** der zylindrische Schaft (23) axial von dem Knopf (20) des ersten Schutzelements (2) absteht und dass das Loch (33) axial in dem Knopf (30) des zweiten Schutzelements (3) gebildet ist.

3. Vorrichtung (1) nach Anspruch 1 oder 2, **dadurch gekennzeichnet, dass** der zylindrische Schaft (23) des ersten Schutzelements (2) in einem Presskopplungsverhältnis in der Art eines Schnappverschlusses in das Loch (33) des zweiten Schutzelements (3) eingreift.

4. Vorrichtung (1) nach Anspruch 3, **dadurch gekennzeichnet, dass** der zylindrische Schaft (23) des ersten Schutzelements (2) einen Abschnitt mit kleinerem Durchmesser oder eine ringförmige Nut (24) aufweist, der/die zwischen zwei radialen Auflageflächen (26, 27) definiert ist.

5. Vorrichtung (1) nach einem der Ansprüche 3 oder 4, **dadurch gekennzeichnet, dass** der zylindrische Schaft (23) des ersten Schutzelements (2) ein kegelstumpfes Ende (28) aufweist.

6. Vorrichtung (1) nach einem der Ansprüche 3 bis 5, **dadurch gekennzeichnet, dass** das Loch (33) des zweiten Schutzelements (3) ein Loch mit kleinerem Durchmesser (34) und ein Loch mit größerem Durchmesser (35), koaxial zueinander aufweist, so dass eine radiale Auflagefläche (36) gebildet ist.

7. Vorrichtung (1) nach einem der vorangehenden Ansprüche, **dadurch gekennzeichnet, dass** der Knopf (20, 30) des ersten und/oder des zweiten Schutzelements (2, 3) im Wesentlichen scheibenförmig ist, wobei die äußere abgerundete Oberfläche im Wesentlichen als sphärische Kappe geformt ist.

8. Vorrichtung (1) nach einem der vorangehenden Ansprüche, **dadurch gekennzeichnet, dass** der Knopf (20, 30) des ersten und/oder des zweiten Schutzelements (2, 3) im Wesentlichen scheibenförmig geformt ist, mit einer im Wesentlichen flachen Innenfläche.

9. Vorrichtung (1) nach einem der vorangehenden Ansprüche, **dadurch gekennzeichnet, dass** der Knopf (20, 30) des ersten und/oder des zweiten Schutzelements (2, 3) aus einem weichen Material, wie Kunststoff oder Gummi, besteht.

## Revendications

1. Dispositif anti-rayures (1) pour chaînes à neige, comprenant :
- un premier élément de protection (2) comprenant un goujon (20) équipé d'un tenon (23), et
- un deuxième élément de protection (3) comprenant un goujon (30), **caractérisé en ce que** ledit tenon (23) du premier élément de protection (2) est adapté pour être inséré dans le crochet de connexion (9), qui relie un lien de la bague extérieure (5) avec les portions de chaîne (6) disposées transversalement sur le pneu (100), et **en ce que** dans ledit goujon (30) du deuxième élément de protection (3) est formé un trou débouchant (33), dans lequel s'engage l'extrémité (28) dudit tenon (23) du premier élément de protection (2).

2. Dispositif (1) selon la revendication 1, **caractérisé en ce que** ledit tenon (23) fait saillie axialement sur le goujon (20) du premier élément de protection (2) et **en ce que** ledit trou (33) est formé axialement dans le goujon (30) du deuxième élément de protection (3).

3. Dispositif (1) selon l'une des revendications 1 ou 2, **caractérisé en ce que** ledit tenon (23) du premier élément de protection (2) s'engage dans une relation d'accouplement par pression, du type verrou à enclenchement, à l'intérieur dudit trou (33) du deuxième élément de protection (3).

4. Dispositif (1) selon la revendication 3, **caractérisé en ce que** ledit tenon (23) du premier élément de protection (2) possède une portion de diamètre ou rainure annulaire (24) plus petite, définie entre deux surfaces de butée radiales (26, 27).

5. Dispositif (1) selon l'une des revendications 3 ou 4, **caractérisé en ce que** ledit tenon (23) du premier élément de protection (2) possède une extrémité conique tronquée (28).

6. Dispositif (1) selon l'une quelconque des revendications précédentes, **caractérisé en ce que** ledit trou (33) dans le deuxième élément de protection (3) comporte un trou de diamètre inférieur (34) et un trou de diamètre supérieur (35) coaxiaux l'un par rapport à l'autre, de manière à former une surface de butée radiale (36).

7. Dispositif (1) selon l'une quelconque des revendications précédentes, **caractérisé en ce que** ledit goujon (20, 30) du premier et/ou du deuxième élément de protection (2, 3) est formé substantiellement comme un disque, avec la surface ronde extérieure substantiellement formée comme un capuchon sphérique.

8. Dispositif (1) selon l'une quelconque des revendications précédentes, **caractérisé en ce que** ledit goujon (20, 30) du premier et/ou du deuxième élément de protection (2, 3) est substantiellement formé comme un disque, avec une surface intérieure substantiellement plate.

9. Dispositif (1) selon l'une quelconque des revendications précédentes, **caractérisé en ce que** ledit goujon (20, 30) du premier et/ou du deuxième élément de protection (2, 3) est constitué d'un matériau souple, tel que le plastique ou le caoutchouc.
